# EUROPEAN PATENT APPLICATION

(11) **EP 4 549 502 A1**
(43) Date of publication of application: **07.05.2025**
(21) Application number: 23868219.9
(22) Date of filing: 20.09.2023
(51) Int. Cl.: C08J 11/08, C08J 11/24, C08G 63/127

(54) **SEPARATION SYSTEM AND SEPARATION METHOD**

(30) Priority: 22.09.2022 JP 2022151848
(71) Applicant: Mitsubishi Heavy Industries, Ltd., Tokyo 100-8332 (JP)
(72) Inventor: MATSUBARA, Wataru, Tokyo 100-8332 (JP); TARUMI, Takeyasu, Tokyo 100-8332 (JP); SEIKI, Yoshio, Tokyo 100-8332 (JP); GENTA, Minoru, Tokyo 100-8332 (JP); ITO, Motofumi, Tokyo 100-8332 (JP); TOMONAGA, Nariyuki, Tokyo 100-8332 (JP); KAWANO, Masaki, Tokyo 100-8332 (JP); OKA, Nobuki, Tokyo 100-8332 (JP); MIYATA, Yasuyuki, Tokyo 100-8332 (JP)
(74) Representative: Studio Torta S.p.A.
(86) International application number: PCT/JP2023/034123
(87) International publication number: WO 2024/063098

(57) **Abstract**

A separation system includes: a solid liquid separation unit configured to remove an impurity by solid-liquid separation from a dissolved solution including a PET solution in which polyethylene terephthalate is dissolved in a monomer derived from polyethylene terephthalate decomposition, and an impurity that is a component other than the polyethylene terephthalate; a storage unit configured to store therein the PET solution separated from the impurity in the solid liquid separation unit and further separate the impurity from the PET solution by gravity; and a reaction unit into which the PET solution separated from the impurity in the storage unit and a reaction solvent reactive with polyethylene terephthalate are introduced and in which polyethylene terephthalate in the PET solution is depolymerized.

## Description

### Field

The present disclosure relates to a separation system and a separation method. Background

Techniques for separating impurities from polyester, for example, to recycle polyester have been known. Patent Literature 1 discloses that polyethylene terephthalate (PET) waste is fed into ethylene glycol (EG) for depolymerization to obtain bis(β-hydroxyethyl) terephthalate (BHET), and that foreign matter other than PET is removed by a filtering machine during or after the depolymerization reaction.

### Citation List

### Patent Literature

Patent Literature 1: Japanese Patent No. 4065659

### Summary

### Technical Problem

Foreign matter included in a target from which polyester is recovered and removed for recycling can be of various shapes. In order to efficiently recover polyester, foreign matter must be properly separated.

The present disclosure is made to solve the aforementioned problem and an object of the present disclosure is to provide a separation system and a separation method that can properly separate PET and foreign matter.

### Solution to Problem

The separation system of the present disclosure comprises: a solid liquid separation unit configured to remove an impurity by solid-liquid separation from a dissolved solution including a PET solution in which polyethylene terephthalate is dissolved in a monomer derived from polyethylene terephthalate decomposition, and an impurity that is a component other than the polyethylene terephthalate; a storage unit configured to store therein the PET solution separated from the impurity by the solid liquid separation unit and further separate the impurity from the PET solution by gravity; and a reaction unit into which the PET solution separated from the impurity in the storage unit and a reaction solvent reactive with polyethylene terephthalate are introduced and in which polyethylene terephthalate in the PET solution is depolymerized.

The separation method of the present disclosure comprises: a step of removing an impurity by solid-liquid separation from a dissolved solution including a PET solution in which polyethylene terephthalate is dissolved in a monomer derived from polyethylene terephthalate decomposition, and an impurity that is a component other than the polyethylene terephthalate; a storage step of storing the PET solution separated from the impurity by the solid-liquid separation, further separating the impurity from the PET solution by gravity, and supplying the PET solution to the reaction unit; and a step of allowing the PET solution separated from the impurity to react with a reaction solvent reactive with polyethylene terephthalate to depolymerize polyethylene terephthalate in the PET solution.

### Advantageous Effects of Invention

According to the present disclosure, PET and foreign matter can be properly separated.

### Brief Description of Drawings

FIG. 1 is a schematic diagram of a polyethylene terephthalate recycling process in the present embodiment.
FIG. 2 is a schematic diagram of a separation system according to a first embodiment.
FIG. 3 is a flowchart illustrating an operation flow of the separation system.
FIG. 4 is a schematic diagram of another example of a reaction unit.
FIG. 5 is a partial schematic diagram of a separation system according to a second embodiment.
FIG. 6 is a partial schematic diagram of a separation system according to a third embodiment.
FIG. 7 is a partial schematic diagram of a separation system according to a fourth embodiment.
FIG. 8 is a partial schematic diagram of a separation system according to a fifth embodiment.
FIG. 9 is a partial schematic diagram of a separation system according to a sixth embodiment.
FIG. 10 is a flowchart illustrating an operation flow of the separation system illustrated in FIG. 9.
FIG. 11 is a partial schematic diagram of a separation system according to a seventh embodiment.

### Description of Embodiments

Preferred embodiments of the present invention will be described in detail below with reference to the accompanying drawings. The present invention is not limited by the embodiments, and if there are a plurality of embodiments, a configuration in which the embodiments are combined is embraced here.

### (First Embodiment)

### (Recycling Process)

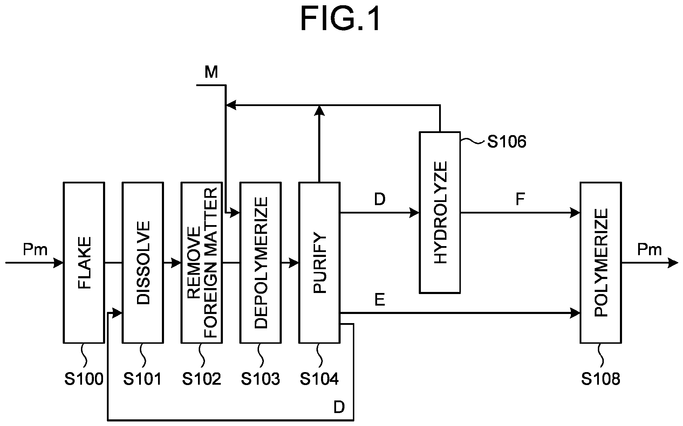

FIG. 1 is a schematic diagram of a polyethylene terephthalate recycling process in the present embodiment. In the present embodiment, a process of recycling (regenerating) a polyethylene terephthalate (PET) raw material Pm is performed by depolymerizing the PET raw material Pm into monomers and polymerizing the monomers again. Specifically, as illustrated in FIG. 1, the PET raw material Pm is regenerated by flaking the PET raw material Pm (step S100), dissolving the flaked PET raw material Pm in a carboxylic acid-derived monomer D to produce a PET dissolved solution (step S101), removing foreign matter from the dissolved solution (step S102), mixing the dissolved solution free from the foreign matter with a reaction solvent M for depolymerization (step S103), purifying (separating) the monomers of the depolymerized polyester to extract a carboxylic acid-derived monomer D and a monomer E of an alcohol component (step S104), hydrolyzing the monomer D to separate the reaction solvent M (step S106), and polymerizing a monomer F produced by hydrolyzing the monomer D with the monomer E (step S108). The recycling process employing a separation system 1 of the present embodiment may eliminate the flaking at step S100 or may perform only the processes of recovering the monomers D and E at step S102 and step S104, and the monomer F at step S106, without performing the process up to polymerizing again at step S108.

### (PET Raw Material)

The PET raw material Pm to be depolymerized in the present embodiment is a substance containing polyethylene terephthalate (PET). The PET raw material Pm is not limited to those containing only PET components and also includes components other than PET components. Examples of the components other than PET contained in the PET raw material Pm include plastics such as polyethylene other than PET, polystyrene, polypropylene, and polyvinyl chloride, metals, pigments, and polymerization catalysts. An example of the PET raw material Pm is clothing in which PET and other components are woven into fibers. Hereinafter, the components other than PET contained in the PET raw material Pm will be referred to as impurities R.

### (Reaction Solvent)

The reaction solvent M is a solvent that reacts with PET to depolymerize PET. The reaction solvent M may be, for example, at least one of methanol, ethanol, water, and ethylene glycol.

### (Monomers Derived from Polyethylene Terephthalate Decomposition)

Monomers derived from polyethylene terephthalate decomposition are monomers produced by a depolymerization reaction of polyethylene terephthalate (PET). The monomers derived from polyethylene terephthalate decomposition include the carboxylic acid-derived monomer D and the monomer E of an alcohol component.

### (Carboxylic Acid-Derived Monomer)

The carboxylic acid-derived monomer D is a monomer having a carboxyl group that is produced by a depolymerization reaction of PET. The monomer D may be, for example, dimethyl carboxylate or diethyl carboxylate. More specifically, the monomer D is preferably a monomer of terephthalic acid and may be, for example, dimethyl terephthalate (DMT).

### (Monomer of Alcohol Component)

The monomer E of an alcohol component is a monomer of an alcohol component that is produced by a depolymerization reaction of PET. The monomer E may be, for example, a dihydroxy compound (divalent alcohol) and more specifically may be ethylene glycol (EG).

In the following, a case where the reaction solvent M is methanol, the monomer D is DMT, and the monomer E is EG will be taken as an example.

### (Separation System)

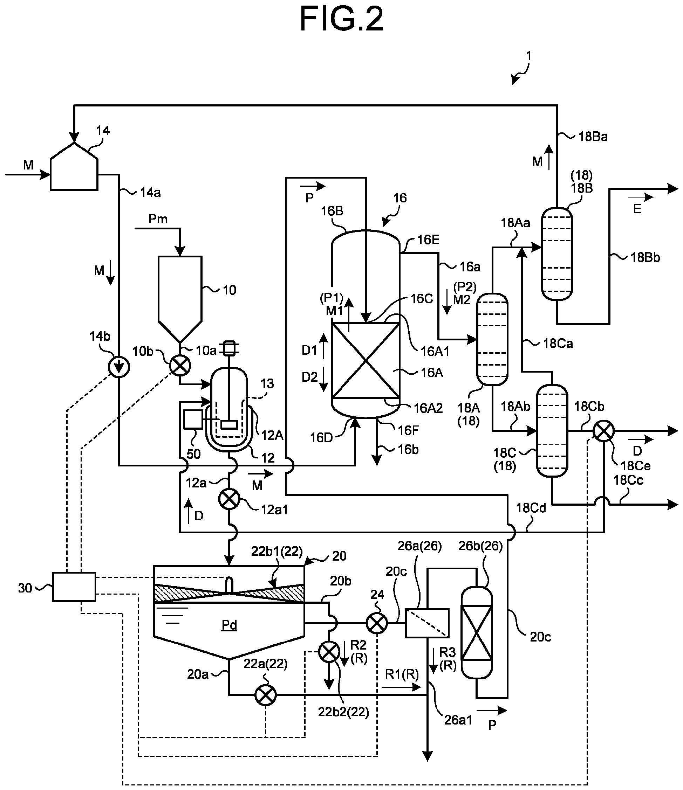

FIG. 2 is a schematic diagram of a separation system according to a first embodiment. The separation system 1 according to the first embodiment is a system for monomerizing a polyester contained in the PET raw material Pm to produce the monomers D and E. As illustrated in FIG. 1, the separation system 1 includes a raw material storage unit 10, a dissolution unit 12, a solid liquid separation unit 13, a storage unit 20, a removal unit 26, a reaction solvent storage unit 14, a reaction unit 16, a separation unit 18, and a control unit 30.

### (Raw Material Storage Unit)

The raw material storage unit 10 is a basin (hopper) into which the PET raw material Pm is introduced and the PET raw material Pm is stored. In the present embodiment, the flaked PET raw material Pm is stored in the raw material storage unit 10, but the PET raw material Pm may have any shape and size. The raw material storage unit 10 is connected to the dissolution unit 12 via an introduction pipe 10a. The PET raw material Pm in the raw material storage unit 10 is supplied to the dissolution unit 12 through the introduction pipe 10a. The introduction pipe 10a is provided with a regulator 10b that regulates the amount of the PET raw material Pm supplied from the raw material storage unit 10 to the dissolution unit 12. The regulator 10b is, for example, an open/close valve that supplies the PET raw material Pm in the raw material storage unit 10 to the dissolution unit 12, in the open state, and stops the supply of the PET raw material Pm in the raw material storage unit 10 to the dissolution unit 12, in the closed state. However, the regulator 10b is not limited to an open/close valve and may be any mechanism that can regulate the supply of the PET raw material Pm to the dissolution unit 12. The PET raw material Pm may be supplied directly to the dissolution unit 12 without passing through the raw material storage unit 10, the introduction pipe 10a, and the regulator 10b.

### (Dissolution Unit)

The dissolution unit 12 is a basin in which a dissolved solution Pd is stored. The dissolved solution Pd is a solution produced by mixing the PET raw material Pm and the monomer D. Here, the PET component contained in the PET raw material Pm dissolves in the monomer D, but the impurities R, which are components other than PET contained in the PET raw material Pm, remain without dissolving in the monomer D. It therefore can be said that the dissolved solution Pd contains a PET solution P in which PET contained in the PET raw material Pm is dissolved in the monomer D, and the impurities R contained in the PET raw material Pm.

The monomer D and the PET raw material Pm are supplied to the dissolution unit 12. In the dissolution unit 12, PET contained in the PET raw material Pm dissolves in the monomer D while the impurities R remain without dissolving in the monomer D, resulting in the dissolved solution Pd containing the PET solution P and the impurities R. Dissolving PET in the monomer D in this manner can reduce viscosity and improve fluidity, so that PET can be easily led to the reaction unit 16. In the PET solution P, the entire amount of the PET is not necessarily dissolved in the monomer D, and PET may be at least partially undissolved in the monomer D. When the components other than PET contained in the PET raw material Pm include a component soluble in the monomer D, the PET solution P may contain the component dissolved in the monomer D.

In the present embodiment, the dissolution unit 12 is provided with a heater 12A. The heater 12A heats the inside of the dissolution unit 12 to heat the monomer D and the PET raw material Pm supplied to the dissolution unit 12 to a predetermined temperature. The predetermined temperature is a temperature at which PET can dissolve in the monomer D. By heating at a predetermined temperature in this way, PET contained in the PET raw material Pm can be properly dissolved in the monomer D. The predetermined temperature is preferably 140°C or higher and 300°C or lower, more preferably 160°C or higher and 280°C or lower, and even more preferably 190°C or higher and 250°C or lower. The impurities R also contain a component that melts when heated to a predetermined temperature (the temperature at which PET can dissolve in the monomer D). The impurities R therefore are contained in the dissolved solution Pd such that they are at least partially melted when the impurities R include a component that melts by heating to a predetermined temperature. In the present embodiment, the heater 12A is provided in, but not limited to, the dissolution unit 12, but the heater 12A may be provided at any location.

### (Solid Liquid Separation Unit)

The solid liquid separation unit 13 is disposed in the dissolution unit 12. The solid liquid separation unit 13 collects solid impurities R contained in the dissolved solution Pd stored in the dissolution unit 12 and separates the solid impurities R from the dissolved solution Pd. The solid liquid separation unit 13 is a mesh-shaped filter to allow liquid to pass through and collect solids. The solid liquid separation unit 13 in the present embodiment is in the shape of a vessel with an open top and is disposed at a predetermined distance from the side surfaces and bottom surface of the dissolution unit 12. The solid liquid separation unit 13 is disposed downstream of the introduction pipe 10a and a supply pipe through which the monomer D is supplied, and upstream of an introduction pipe 12a that supplies the dissolved solution Pd from the dissolution unit 12 to the storage unit 20 downstream. The dissolved solution Pd flowing into the introduction pipe 12a from the dissolution unit 12 passes through the solid liquid separation unit 13. As a result, the solid liquid separation unit 13 collects solids larger than the mesh opening size. It is preferable that the solid liquid separation unit 13 has a mesh opening size of 1 mm or more and 50 mm or less.

The solid liquid separation unit 13 in the present embodiment employs a mesh-shaped filter for filtration, but is not limited to this. The solid liquid separation unit 13 may separate the impurities R from the dissolved solution Pd by centrifugal separation in which the interior of the dissolution unit 12 is agitated around a predetermined axis and impurities are moved radially outward of the axis of rotation. The solid liquid separation unit 13 is not limited to filtration or centrifugal separation as long as it can separate solid impurities of a predetermined size or larger from the dissolved solution Pd.

A foreign matter recovering unit 50 recovers the solid impurities collected by the solid liquid separation unit 13. The foreign matter recovering unit 50, for example, allows the filter of the solid liquid separation unit 13 to move and recovers impurities adhering thereto. The solid liquid separation unit 13 may have a press device that presses impurities adhering to the mesh-shaped filter against the filter and squeezes out the dissolved solution Pd contained in the impurities. Before the foreign matter recovering unit 50 recovers impurities, the press device squeezes the dissolved solution to leave a more amount of dissolved solution Pd in the separation system 1. When the solid liquid separation unit 13 separates impurities by centrifugal separation, the foreign matter recovering unit 50 recovers impurities from an area that stores the impurities separated by centrifugal separation.

### (Storage Unit)

The storage unit 20 is a basin in which the dissolved solution Pd is stored. The storage unit 20 is connected to the dissolution unit 12 via the introduction pipe 12a. The dissolved solution Pd in the dissolution unit 12 is supplied to the storage unit 20 through the introduction pipe 12a. The introduction pipe 12a is provided with a regulator 12a1 that regulates the amount of the dissolved solution Pd supplied from the dissolution unit 12 to the storage unit 20. The regulator 12a1 is, for example, an open/close valve that supplies the dissolved solution Pd in the dissolution unit 12 to the storage unit 20, in the open state, and stops the supply of the dissolved solution Pd in the dissolution unit 12 to the storage unit 20, in the closed state. However, the regulator 12a1 is not limited to an open/close valve and may be any mechanism that can regulate the supply of the dissolved solution Pd to the storage unit 20. In the present embodiment, the storage unit 20 is connected to the dissolution unit 12 via the introduction pipe 12a, but a temporary storage unit can be provided between the dissolution unit 12 and the storage unit 20 to temporarily store the dissolved solution Pd.

In the storage unit 20, the dissolved solution Pd is separated by gravity into the PET solution P and the impurities R. Here, the impurities R to be separated in the storage unit 20 are impurities moved together with the dissolved solution Pd to the storage unit 20 without being collected in the solid liquid separation unit 13. In the present embodiment, the dissolved solution Pd stored in the storage unit 20 is allowed to stand still and thereby separated by gravity into the PET solution P and the impurities R.

In the present embodiment, the dissolved solution Pd stored in the storage unit 20 is separated by gravity into a layer of a first impurity R1, a layer of the PET solution P, and a layer of a second impurity R2. The layer of the first impurity R1 is formed vertically below the layer of the PET solution P. In other words, among the impurities R, the first impurity R1 is the one not dissolved in the monomer D and has a greater specific gravity than that of the PET solution P. The first impurity R1 settles down in the PET solution P in the storage unit 20 to form a layer of the first impurity R1. On the other hand, the layer of the second impurity R2 is formed vertically above the layer of the PET solution P. In other words, among the impurities R, the second impurity R2 is the one not dissolved in the monomer D and has a smaller specific gravity than that of the PET solution P. The second impurity R2 floats in the PET solution P in the storage unit 20 to form a layer of the second impurity R2.

The dissolved solution Pd in the storage unit 20 is kept at a predetermined temperature (the temperature at which PET can dissolve in the monomer D) or higher. Among the impurities R, the first impurity R1 and the second impurity R2 are components that melt when heated to a predetermined temperature and thus exist in a melted state even in the storage unit 20. The first impurity R1 and the second impurity R2 are, for example, plastics other than PET (polyethylene other than PET, polystyrene, polypropylene, polyvinyl chloride, etc.).

In the present embodiment, the layer of the PET solution P contains a third impurity R3. Among the impurities R, the third impurity R3 is a component that does not dissolve in the monomer D and does not melt even at a predetermined temperature (the temperature at which PET can dissolve in the monomer D). In other words, the third impurity R3 is not separated from the PET solution P even by gravity separation and exists in the PET solution P in a not-melted solid state. The third impurity R3 is an impurity present in the PET solution and is an entrained impurity that is discharged together with polyethylene terephthalate from the storage unit 20. In other words, the third impurity is an impurity that is unable to be separated in the storage unit using gravity settling, specific gravity difference, or the like. In the present embodiment, the third impurity R3 is dispersed in the PET solution P. The third impurity R3 is, for example, dyes, pigments, and polymerization catalysts.

A discharge pipe 20a is connected to the storage unit 20. The discharge pipe 20a is a pipe for discharging the first impurity R1 separated into the layer below the PET solution P from the storage unit 20. The discharge pipe 20a is connected to the location where the layer of the first impurity R1 is formed in the storage unit 20, and in the example of the present embodiment, is connected to the bottom of the storage unit 20. The discharge pipe 20a is provided with a first discharge unit 22a. The first discharge unit 22a is a mechanism that discharges the first impurity R1 in the storage unit 20 from the storage unit 20, and in the present embodiment, is a pump.

A discharge pipe 20b is connected to the storage unit 20. The discharge pipe 20b is a pipe for discharging the second impurity R2 separated into the layer above the PET solution P from the storage unit 20. The discharge pipe 20b is connected to the location where the layer of the second impurity R2 is formed in the storage unit 20, and is connected vertically above the discharge pipe 20a. Second discharge units 22b1 and 22b2 are attached to the storage unit 20 to discharge the second impurity R2 in the storage unit 20 from the storage unit 20. The second discharge unit 22b1 is a skimmer provided at the liquid surface of the PET solution P and recovers (scrapes off) the second impurity R2 floating on the liquid surface of the PET solution P. The second discharge unit 22b2 is a mechanism provided at the discharge pipe 20b to discharge the second impurity R2 recovered by the second discharge unit 22b1 via the discharge pipe 20b, and in the present embodiment, is a pump. In this way, in the example of the present embodiment, the second discharge units 22b1 and 22b2 are provided as a mechanism for discharging the second impurity R2. However, the configuration of the second discharge unit for discharging the second impurity R2 is not limited to this, and any configuration may be employed. For example, in the present embodiment, the second discharge unit 22b1 that is a skimmer to scrape off the impurity at the liquid surface is provided, but a mechanism to recover the second impurity R2 by overflow may be provided instead of a skimmer. In this case, a discharge pipe serving as the second discharge unit is disposed at the liquid level where the second impurity is accumulated in the storage unit 20. The second discharge unit may be a mechanism that has a pump or a valve in a pipeline for recovering a liquid overflow and discharge the liquid when the liquid level of the liquid in the storage unit 20 is above a connection portion of the pipeline of the second discharge unit although the timing for recovering the second impurity is controlled.

The first impurity R1 and the second impurity R2 separated from the PET solution P in the storage unit 20 are discharged to the outside of the storage unit 20 by the first discharge unit 22a and the second discharge units 22b1 and 22b2. The first impurity R1 and the second impurity R2 are thus removed from the PET solution P. Hereinafter, the first discharge unit 22a and the second discharge units 22b1 and 22b2 will be referred to as a discharge unit 22 when they are not distinguished from each other. In the description above, the impurities R include the first impurity R1 having a greater specific gravity than that of the PET solution P and the second impurity R2 having a smaller specific gravity than that of the PET solution P. However, the impurities R may include only one of the first impurity R1 and the second impurity R2.

An introduction pipe 20c is connected to the storage unit 20. The introduction pipe 20c is a pipe for leading the PET solution P separated from the impurities R from the storage unit 20. The introduction pipe 20c is connected to the location where the layer of the PET solution P is formed in the storage unit 20, and in the example of the present embodiment, is connected to a location between the discharge pipe 20a and the discharge pipe 20b in the vertical direction. The introduction pipe 20c is provided with an outlet unit 24. The outlet unit 24 is a mechanism that leads the PET solution P in the storage unit 20 from the storage unit 20, and is a pump in the present embodiment.

### (Removal Unit)

The removal unit 26 is a mechanism that removes the third impurity R3 contained in the PET solution P from the PET solution P. The removal unit 26 is connected to the introduction pipe 20c. In the present embodiment, a first removal unit 26a and a second removal unit 26b are provided as the removal unit 26. The first removal unit 26a is a filtering machine and collects a solid component contained in the PET solution P. The second removal unit 26b is an adsorber and adsorbs a solid component contained in the PET solution P that is not collected by the first removal unit 26a. The second removal unit 26b filters the solid component contained in the PET solution P that is not collected by the first removal unit 26a, through a packed bed in the adsorber. The second removal unit 26b may perform at least one of adsorption or filtration of the solid component.

The PET solution P led from the storage unit 20 to the introduction pipe 20c is introduced into the first removal unit 26a, and at least part of the third impurity R3 contained in the PET solution P is collected in the first removal unit 26a. The third impurity R3 collected by the first removal unit 26a is discharged to the outside through a discharge pipe 26a1 connected to the first removal unit 26a. In the example in FIG. 2, the discharge pipe 26a1 joins the discharge pipe 20a but may not necessarily join the discharge pipe 20a. The PET solution P from which at least part of the third impurity R3 has been removed by the first removal unit 26a is led from the first removal unit 26a and introduced into the second removal unit 26b. In the second removal unit 26b, the third impurity R3 remaining in the PET solution P is adsorbed or filtered in the second removal unit 26b and then removed from the PET solution P. The third impurity R3 adsorbed or filtered in the second removal unit 26b is, for example, a dye or a polymerization catalyst. The PET solution P from which the third impurity R3 has been removed by the second removal unit 26b is led from the second removal unit 26b and introduced into the reaction unit 16 through the introduction pipe 20c.

In this way, in the present embodiment, the first removal unit 26a and the second removal unit 26b are provided as a mechanism for removing the third impurity R3 from the PET solution P. However, the configuration of the removal unit 26 for removing the third impurity R3 is not limited to this, and any configuration may be employed. Since the impurities R do not always include the third impurity R3, the removal unit 26 is not an essential component.

### (Solvent Storage Unit)

The solvent storage unit 14 is a basin into which the reaction solvent M is introduced and the reaction solvent M is stored. The solvent storage unit 14 is connected to the reaction unit 16 via an introduction pipe 14a. The reaction solvent M in the solvent storage unit 14 is supplied to the reaction unit 16 through the introduction pipe 14a. More specifically, the introduction pipe 14a is provided with a heater/booster 14b that pressurizes and heats the reaction solvent M. The heater/booster 14b pressurizes and heats the reaction solvent M to bring the reaction solvent M into a supercritical state or a subcritical state (pressurized gas or pressurized liquid). The reaction solvent M in a supercritical or subcritical state (pressurized gas or pressurized liquid) is supplied to the reaction unit 16.

### (Reaction Unit)

The reaction unit 16 is a vessel into which the PET solution P separated from the impurities R in the storage unit 20 and the reaction solvent M are introduced and in which PET in the PET solution P is depolymerized. The reaction unit 16 includes a first reaction unit 16A and a second reaction unit 16B.

### (First Reaction Unit)

The first reaction unit 16A is formed in the reaction unit 16. In the present embodiment, it can be said that the first reaction unit 16A is a section in which a packing material is packed in the reaction unit 16. In the first reaction unit 16A, known packing materials used in gas-liquid or liquid-liquid contactors can be used as the packing material. For example, those similar to packing materials used in a contactor that brings heavy oil and water into contact to extract active ingredients can be used. Examples of the packing material include pipes made of SUS and the like, Raschig rings, Berl saddles, and Tellerettes.

The introduction pipe 20c is connected to the first reaction unit 16A. More specifically, an introduction port 16C of the introduction pipe 20c, which is an opening through which the PET solution P from the storage unit 20 is introduced, is connected to the first reaction unit 16A. The introduction port 16C is connected to a surface 16A1 on a first direction D1 side of the first reaction unit 16A. The introduction pipe 20c is connected to the surface 16A1 such that the introduction port 16C is open to a second direction D2 side opposite to the first direction D1. In this way, in the present embodiment, the introduction port 16C open to the second direction D2 side is connected to the surface 16A1 of the first reaction unit 16A, but the position of the introduction port 16C is not limited to this. For example, the introduction port 16C may not necessarily be directly connected to the first reaction unit 16A. The introduction port 16C open to the second direction D2 side may be connected on the first direction D1 side with respect to the surface 16A1 of the first reaction unit 16A in the reaction unit 16.

The introduction pipe 14a is connected to the reaction unit 16. More specifically, an introduction port 16D of the introduction pipe 14a, which is an opening through which the reaction solvent M from the solvent storage unit 14 is introduced, is connected to the reaction unit 16. The introduction port 16D is connected on the second direction D2 side with respect to a surface 16A2 on the second direction D2 side of the first reaction unit 16A. The introduction pipe 14a is connected on the second direction D2 side with respect to the surface 16A2 such that the introduction port 16D is open to the first direction D1 side or to the center from a side surface. In this way, in the present embodiment, the introduction port 16D open to the first direction D1 side or to the center from a side surface is connected on the second direction D2 side with respect to the surface 16A2 of the first reaction unit 16A, but the position of the introduction port 16D is not limited to this. For example, the introduction port 16D may be directly connected to the first reaction unit 16A or may be connected to the surface 16A2 of the first reaction unit 16A.

In this way, in the present embodiment, the introduction port 16C through which the PET solution P is introduced is open toward the second direction D2, and the introduction port 16D through which the reaction solvent M is introduced is open toward the first direction D1 or to the center from a side surface. The PET solution P and the reaction solvent M are therefore introduced into the first reaction unit 16A in directions facing each other.

The PET solution P introduced into the first reaction unit 16A through the introduction port 16C moves toward the second direction D2 on the surface of the packing material in the first reaction unit 16A. On the other hand, the reaction solvent M in a supercritical or subcritical state (pressurized gas or pressurized liquid) introduced through the introduction port 16D moves toward the first direction D1 in the first reaction unit 16A. In the first reaction unit 16A, the reaction solvent M in a supercritical or subcritical state (pressurized gas or pressurized liquid) comes into contact with the PET solution P. PET in the PET solution P is depolymerized (converted into a low molecular weight) by the reaction solvent M. The depolymerized PET is extracted into the reaction solvent M in a supercritical or subcritical state (pressurized gas or pressurized liquid). Hereinafter, the PET depolymerized in the first reaction unit 16A will be referred to as first depolymerized polyester P1, and the mixture of the first depolymerized polyester P1 and the reaction solvent M (reaction solvent M in which the first depolymerized polyester P1 is extracted) will be referred to as first solvent M1. The first solvent M1 containing the first depolymerized polyester P1 proceeds through the first reaction unit 16A to the first direction D1 side and is led to the first direction D1 side of the first reaction unit 16A.

The first depolymerized polyester P1 contains monomers D and E produced by the depolymerization of PET in the PET solution P, monomer D originally mixed in the PET solution P, and oligomers produced by the depolymerization of PET. As used herein, the oligomers are an oligomer derived from carboxylic acid and an oligomer of an alcohol component that are not monomerized but are depolymerized from PET (oligomer derived from carboxylic acid and oligomer of an alcohol component with a smaller molecular weight than that of PET).

### (Second Reaction Unit)

The second reaction unit 16B is formed in the reaction unit 16. The second reaction unit 16B is formed in a section where the first solvent M1 is led from the first reaction unit 16A. In the present embodiment, since the first solvent M1 is led to the first direction D1 side, it can be said that the second reaction unit 16B is a space formed on the first direction D1 side of the first reaction unit 16A.

In the second reaction unit 16B, the first depolymerized polyester P1 contained in the first solvent M1 is further depolymerized (converted into a low molecular weight) by the reaction solvent M contained in the first solvent M1. Hereinafter, the first depolymerized polyester P1 further depolymerized in the second reaction unit 16B will be referred to as second depolymerized polyester P2, and the mixture of the second depolymerized polyester P2 and the reaction solvent M (reaction solvent M in which the second depolymerized polyester P2 is dissolved) will be referred to as second solvent M2. An outlet pipe 16a is connected to the second reaction unit 16B. More specifically, an outlet port 16E of the outlet pipe 16a, which is an opening through which the second solvent M2 from the second reaction unit 16B is led, is connected to the second reaction unit 16B. The second solvent M2 containing the second depolymerized polyester P2 in the second reaction unit 16B is led from the outlet port 16E to the outside of the second reaction unit 16B through the outlet pipe 16a.

The second depolymerized polyester P2 contains monomers D and E in the first depolymerized polyester P1, monomers D and E produced by the depolymerization of the oligomers in the first depolymerized polyester P1, and oligomers produced by the depolymerization of the first depolymerized polyester P1.

A discharge pipe 16b is connected to the bottom of the reaction unit 16. More specifically, a discharge port 16F of the discharge pipe 16b, which is an opening through which non-extractable components (described later) in the reaction unit 16 are discharged, is connected to the bottom of the reaction unit 16. The non-extractable components including impurities such as metal compounds not extracted into the reaction solvent M and residues of undecomposed polyester not extracted into the reaction solvent M are discharged from the discharge port 16F. In other words, the non-extractable components at the bottom of the reaction unit 16 are discharged from the discharge port 16F to the outside of the reaction unit 16 through the discharge pipe 16b. It can be said that the non-extractable components discharged from the discharge port 16F are components in the PET solution P that are not led to the separation unit 18 as the second solvent M2 (reaction solvent M in which the second depolymerized polyester P2 is dissolved) and remain in the first reaction unit 16A and the second reaction unit 16B.

The reaction unit 16 may be provided with a heater that heats the interior of the reaction unit 16 and a booster that maintains the pressure inside the reaction unit 16 at a predetermined value or higher. The temperature inside the reaction unit 16 is preferably 250°C or higher and 400°C or lower and more preferably 250°C or higher and 350°C or lower. The pressure inside the reaction unit 16 is preferably 1 MPa or higher and 30 MPa or lower and more preferably 6 MPa or higher and 25 MPa or lower. The booster and the heater may be controlled by the control unit 30.

### (Separation Unit)

In the separation unit 18, the second solvent M2 containing the second depolymerized polyester P2 is introduced, and the second solvent M2 is separated into the reaction solvent M, carboxylic acid-derived monomer D contained in the second depolymerized polyester P2, monomer E of an alcohol component contained in the second depolymerized polyester P2, and a residual substance. The residual substance is a component of the second solvent M2 other than the reaction solvent M, the monomer D, and the monomer E, and includes oligomers.

In the present embodiment, the separation unit 18 includes a first separation unit 18A, a second separation unit 18B, and a third separation unit 18C.

The first separation unit 18A is a separator connected to the outlet pipe 16a. The second solvent M2 containing the second depolymerized polyester P2 is introduced into the first separation unit 18A via the outlet pipe 16a. The first separation unit 18A separates the second solvent M2 into a low boiling point component and a high boiling point component with a higher boiling point than the low boiling point component. For example, in the first separation unit 18A, a component that is gas produced with the temperature of the second solvent M2 set to a predetermined temperature may be the low boiling point component, and a liquid component may be the high boiling point component. Outlet pipes 18Aa and 18Ab are connected to the first separation unit 18A. The low boiling point component is led from the outlet pipe 18Aa, and the high boiling point component is led from the outlet pipe 18Ab.

The second separation unit 18B is a separator connected to the first separation unit 18A via the outlet pipe 18Aa. The low boiling point component is introduced into the second separation unit 18B via the outlet pipe 18Aa. The second separation unit 18B separates the low boiling point component into the reaction solvent M and the monomer E. Outlet pipes 18Ba and 18Bb are connected to the second separation unit 18B. The reaction solvent M is led from the outlet pipe 18Ba, and the monomer E is led from the outlet pipe 18Bb. The outlet pipe 18Ba is connected to the second separation unit 18B and the solvent storage unit 14. The reaction solvent M led from the second separation unit 18B is therefore returned to the solvent storage unit 14 and reused for depolymerizing PET.

The third separation unit 18C is a separator connected to the first separation unit 18A via the outlet pipe 18Ab. The high boiling point component is introduced into the third separation unit 18C via the outlet pipe 18Ab. The third separation unit 18C separates the high boiling point component into a residual substance with an even higher boiling point, a low boiling point component containing the reaction solvent M and the monomer E, and the monomer D. Outlet pipes 18Ca, 18Cb, and 18Cc are connected to the third separation unit 18C. The outlet pipe 18Ca is connected to the second separation unit 18B. The low boiling point component separated in the third separation unit 18C is led to the second separation unit 18B via the outlet pipe 18Ca. The monomer D separated in the third separation unit 18C is led through the outlet pipe 18Cb, and the residual substance separated in the third separation unit 18C is led through the outlet pipe 18Cc.

An introduction pipe 18Cd is connected to the third separation unit 18C. The introduction pipe 18Cd is also connected to the dissolution unit 12 and introduces the monomer D led from the third separation unit 18C into the dissolution unit 12. In the example in FIG. 2, the introduction pipe 18Cd branches off from the outlet pipe 18Cb. The introduction pipe 18Cd is provided with a regulator 18Ce that regulates the amount of monomer D supplied from the third separation unit 18C to the dissolution unit 12. The regulator 18Ce is, for example, an open/close valve that supplies the monomer D to the dissolution unit 12, in the open state, and stops the supply of the monomer D to the dissolution unit 12, in the closed state. However, the regulator 18Ce is not limited to an open/close valve and may be any mechanism that can regulate the supply of the monomer D to the dissolution unit 12. In the present embodiment, the regulator 18Ce is provided at the branch section of the introduction pipe 18Cd from the outlet pipe 18Cb. However, the regulator 18Ce may be provided at any location. The introduction pipe 18Cd may not necessarily be connected to the outlet pipe 18Cb and may be directly connected to the third separation unit 18C. For example, a storage unit (basin) for storing the monomer D may be provided at the outlet pipe 18Cb, and the introduction pipe 18Cd may be connected to the storage unit.

The outlet pipe 18Cc may be connected to the dissolution unit 12 to introduce at least part of the residual substance into the dissolution unit 12. By introducing the residual substance into the dissolution unit 12, the oligomers contained in the residual substance can be depolymerized again in the reaction unit 16, thereby improving the monomer yields.

### (Control Unit)

The control unit 30 is a control device that controls the separation system 1. The control unit 30 controls the regulator 10b to control the amount of the PET raw material Pm supplied from the raw material storage unit 10 to the dissolution unit 12. The control unit 30 controls the foreign matter recovering unit 50 to recover impurities collected in the solid liquid separation unit 13. In a case where the solid liquid separation unit 13 has a drive unit, the control unit 30 also controls the operation of the solid liquid separation unit 13. The control unit 30 controls the regulator 12a1 to control the amount of the dissolved solution Pd supplied from the dissolution unit 12 to the storage unit 20. The control unit 30 controls the discharge unit 22 to discharge the impurities R separated from the PET solution P in the storage unit 20 from the storage unit 20. The control unit 30 controls the outlet unit 24 to lead the PET solution P separated from the impurities R in the storage unit 20 from the storage unit 20 and control the amount of the PET solution P introduced into the reaction unit 16. The control unit 30 controls the heater/booster 14b to bring the reaction solvent M into a supercritical or subcritical state (pressurized gas or pressurized liquid) and control the amount of the reaction solvent M in the supercritical or subcritical state (pressurized gas or pressurized liquid) supplied to the reaction unit 16. The control unit 30 controls the regulator 18Ce to control the amount of the monomer D supplied to the dissolution unit 12.

The control unit 30 is a computer in the present embodiment and includes, for example, a processor including an arithmetic circuit such as a central processing unit (CPU) and a memory that stores therein various information such as the contents of operations by the processor and programs. The control unit 30 executes control of the separation system 1 by reading programs from the memory.

The separation system 1, however, may not necessarily be automatically controlled by the control unit 30. For example, at least some of the processes may be controlled by the operation of a worker.

### (Operation of Separation System)

The operation of the separation system 1 will now be described. The control unit 30 controls the regulators 10b and 18Ce to introduce the PET raw material Pm and the monomer D into the dissolution unit 12 and mix the PET raw material Pm and the monomer D in the dissolution unit 12 to produce the dissolved solution Pd. The control unit 30 controls the regulator 12a1 to introduce the dissolved solution Pd produced in the dissolution unit 12 into the storage unit 20. The separation system 1 removes the impurities R from the dissolved solution Pd supplied from the dissolution unit 12 to the storage unit 20 in the solid liquid separation unit 13. The dissolved solution Pd introduced into the storage unit 20 is allowed to stand still for a predetermined time period and thereby separated by gravity into a layer of the first impurity R1, a layer of the PET solution P, and a layer of the second impurity R2. Any method may be employed to allow the dissolved solution Pd to stand still.

The control unit 30 controls the discharge unit 22 to discharge the first impurity R1 and the second impurity R2 in the storage unit 20 while controlling the outlet unit 24 to lead the PET solution P in the storage unit 20 from the storage unit 20. The PET solution P led from the storage unit 20 is introduced into the first reaction unit 16A after the third impurity R3 is removed by the removal unit 26. The control unit 30 controls the heater/booster 14b to supply the reaction solvent M brought into a supercritical or subcritical state (pressurized gas or pressurized liquid) to the reaction unit 16. The control unit 30 preferably sets the temperature of the reaction solvent M to 250°C or higher and 400°C or lower and more preferably to 250°C or higher and 350°C or lower. The control unit 30 preferably sets the pressure of the reaction solvent M to 1 MPa or higher and 30 MPa or lower and more preferably to 6 MPa or higher and 25 MPa or lower.

In this way, the PET solution P and the reaction solvent M are supplied to the reaction unit 16, and PET contained in the PET solution P is depolymerized in the first reaction unit 16A to produce the first depolymerized polyester P1. In the second reaction unit 16B, the first depolymerized polyester P1 is further depolymerized to produce the second solvent M2 which is a mixture of the second depolymerized polyester P2 and the reaction solvent M. The second solvent M2 is separated into the reaction solvent M, the monomer D, the monomer E, and the residual substance in the first separation unit 18A, the second separation unit 18B, and the third separation unit 18C. In this way, the monomers D and E can be recovered from the PET raw material Pm and polymerized to regenerate polyethylene terephthalate.

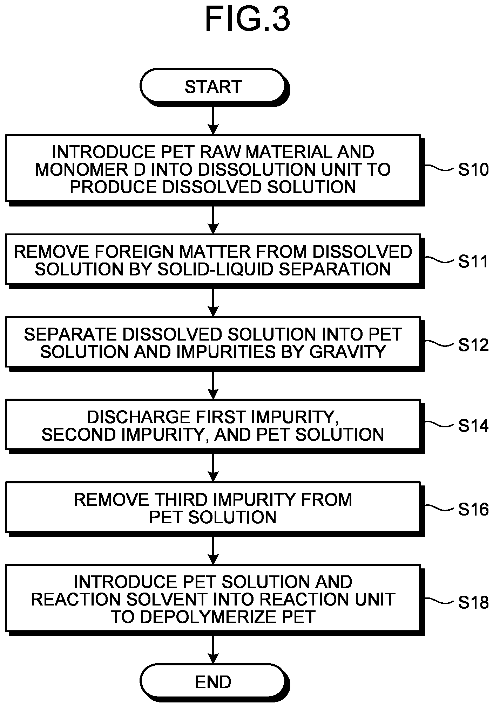

The flow of the operation of the separation system 1 described above will be described based on a flowchart. FIG. 3 is a flowchart illustrating an operation flow of the separation system. As illustrated in FIG. 3, the control unit 30 introduces the PET raw material Pm and the monomer D into the dissolution unit 12 to produce the dissolved solution Pd (step S10). The separation system 1 removes the impurities R from the dissolved solution Pd by solid liquid separation (step S11). The control unit 30 then supplies the dissolved solution Pd to the storage unit 20 to separate the dissolved solution Pd into the first impurity R1, the second impurity R2, and the PET solution P by gravity (step S12). The control unit 30 discharges the first impurity R1, the second impurity R2, and the PET solution P from the storage unit 20 (step S14) and allows the removal unit 26 to remove the third impurity R3 from the PET solution P (step S16). The control unit 30 then introduces the PET solution P and the reaction solvent M into the reaction unit 16 to depolymerize PET in the PET solution P (step S18).

### (Effects)

The PET raw material Pm may contain the impurities R other than PET, and the impurities R have to be removed in order to depolymerize PET for recycling. The separation system 1 has the solid liquid separation unit 13 to remove solids of a predetermined size from the dissolved solution in the dissolution unit 12, thereby properly separating foreign matter from a target to be processed. In particular, foreign matter can be suitably separated when clothing containing solid impurities is processed as the target to be processed. In addition, as in the present embodiment, the solid liquid separation unit 13 is disposed in the dissolution unit 12 that produces the dissolved solution Pd, thereby reducing impurities in the liquid supplied from the dissolution unit 12 to the storage unit 20.

The separation system 1 can more suitably separate foreign matter by removing, by gravity separation, impurities from the dissolved solution Pd processed in the solid liquid separation unit 13 and stored in the storage unit 20. The impurities R may be present as a high-viscosity melt and therefore may block the filter openings of the filtering machine, if the openings are small, and the impurities R may fail to be properly recovered and separated. In contrast, in the present embodiment, the dissolved solution Pd is separated into the PET solution P and the impurities R by gravity separation. The impurities R separated by gravity are then discharged, and the PET solution P separated by gravity is used for depolymerization. This process enables proper recovery of the impurities R and proper separation into PET and foreign matter without blocking the filter openings of the filtering machine.

In the present embodiment, the PET solution P is depolymerized after the impurities R are removed. Depolymerization therefore can be performed with the increased purity of PET during the depolymerization, and the yields of the monomers D and E can be improved. The impurities R may contain a polymerization catalyst. The polymerization catalyst is a catalyst that promotes polymerization and may inhibit depolymerization. In contrast, in the present embodiment, since depolymerization is carried out after the polymerization catalyst is removed, the polymerization can be carried out properly, and the yields of the monomers D and E can be improved. Furthermore, when a catalyst for depolymerization is added in depolymerization, the amount of added catalyst for depolymerization can be reduced in accordance with removal of the polymerization catalyst.

### (Other Configuration Examples)

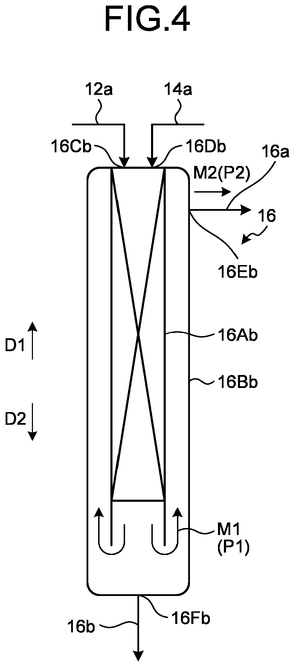

In the present embodiment, the PET solution P and the reaction solvent M are supplied in the first reaction unit 16A in directions facing each other. However, the embodiment is not limited to this, and they may be supplied in the same direction. FIG. 4 is a schematic diagram of another example of the reaction unit. In this case, for example, as illustrated in FIG. 4, the reaction unit 16 has a double-pipe structure, in which the inner tube portion may serve as a first reaction unit 16Ab and the outer tube portion may serve as a second reaction unit 16Bb. In this case, an introduction port 16Cb of the PET solution P and an introduction port 16Db of the reaction solvent M are open to the second direction D2 side and connected to the surface on the first direction D1 side of the first reaction unit 16Ab. The PET solution P and the reaction solvent M are therefore supplied to the second direction D2 side, that is, in the same direction. The PET solution P and the reaction solvent M proceed toward the second direction D2 side while reacting in the first reaction unit 16Ab, flow as the first solvent M1 (reaction solvent M in which the first depolymerized polyester P1 is extracted) into the second reaction unit 16Bb at the distal end of the first reaction unit 16Ab, continue to further react, and are led as the second solvent M2 (reaction solvent M containing the second depolymerized polyester P2) from an outlet port 16Eb open in the second reaction unit 16Bb. The non-extractable components are discharged from a discharge port 16Fb open at the bottom of the reaction unit 16.

The configuration of the reaction unit 16 for depolymerizing PET is not limited to that described above, and any configuration may be employed. For example, the reaction unit 16 may not necessarily be a two-stage configuration including the first reaction unit 16A and the second reaction unit 16B. The configuration of the separation unit 18 for separating the monomers D and E and the like is also not limited to that described above, and any configuration may be employed. In the description above, methanol is used as the reaction solvent M for depolymerizing PET. However, the reaction solvent M is not limited to methanol and may be ethylene glycol or the like as described above.

### (Second Embodiment)

A second embodiment will now be described. The second embodiment differs from the first embodiment in that at least part of each of the first impurity R1 and the second impurity R2 is returned to the dissolution unit 12. In the second embodiment, the sections having a configuration common to those in the first embodiment will not be further elaborated.

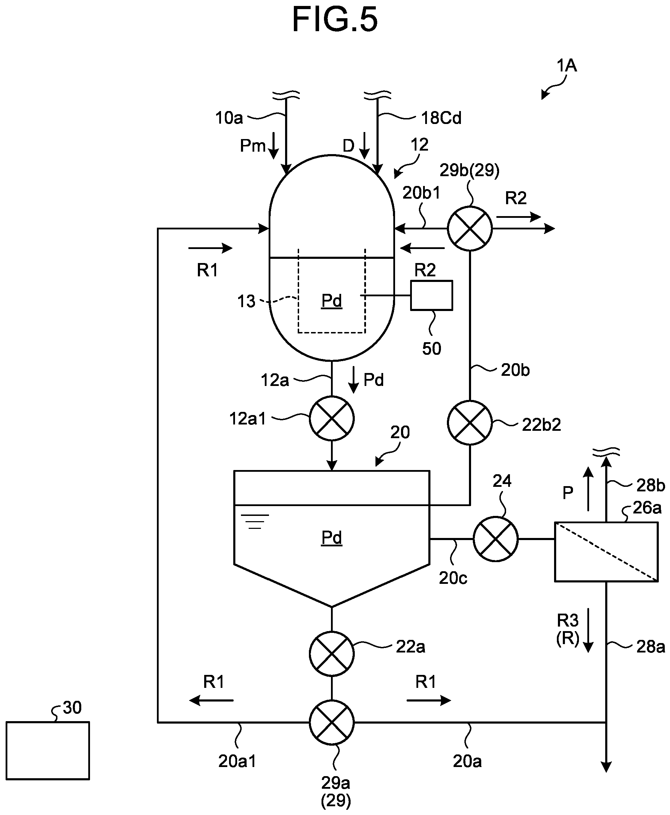

FIG. 5 is a partial schematic diagram of a separation system according to the second embodiment. As illustrated in FIG. 5, a separation system 1A according to the second embodiment includes an introduction unit 29 that introduces at least part of each of the first impurity R1 and the second impurity R2 into the dissolution unit 12.

Specifically, the separation system 1A has an introduction pipe (circulation line) 20a1 that connects the storage unit 20 to the dissolution unit 12. The introduction pipe 20a1 is a pipe that branches off from the discharge pipe 20a and connects the discharge pipe 20a to the dissolution unit 12. The introduction pipe 20a1 is provided with an introduction unit 29a that regulates the amount of the first impurity R1 introduced from the storage unit 20 into the dissolution unit 12. The introduction unit 29a is, for example, an open/close valve that supplies the first impurity R1 to the dissolution unit 12, in the open state, and stops the supply of the first impurity R1 to the dissolution unit 12, in the closed state. However, the introduction unit 29a is not limited to an open/close valve and may be any mechanism that can regulate the supply of the first impurity R1 to the dissolution unit 12. In the example in FIG. 5, the introduction unit 29a is provided at the branch section of the introduction pipe 20a1 from the discharge pipe 20a. However, the introduction unit 29a may be provided at any location. The introduction pipe 20a1 may not necessarily branch off from the discharge pipe 20a and may be directly connected to the storage unit 20 and the dissolution unit 12.

In the separation system 1A, an introduction pipe 20b1 is provided to connect the storage unit 20 to the dissolution unit 12. The introduction pipe 20b1 is a pipe that branches off from the discharge pipe 20b and connects the discharge pipe 20b to the dissolution unit 12. The introduction pipe 20b1 is provided with an introduction unit 29b that regulates the amount of the second impurity R2 introduced from the storage unit 20 into the dissolution unit 12. The introduction unit 29b is, for example, an open/close valve that supplies the second impurity R2 to the dissolution unit 12, in the open state, and stops the supply of the second impurity R2 to the dissolution unit 12, in the closed state. However, the introduction unit 29b is not limited to an open/close valve and may be any mechanism that can regulate the supply of the second impurity R2 to the dissolution unit 12. In the example in FIG. 5, the introduction unit 29b is provided at the branch section of the introduction pipe 20b1 from the discharge pipe 20b. However, the introduction unit 29b may be provided at any location. The introduction pipe 20b1 may not necessarily branch off from the discharge pipe 20b and may be directly connected to the storage unit 20 and the dissolution unit 12.

The control unit 30 introduces at least part of each of the first impurity R1 and the second impurity R2 in the storage unit 20 into the dissolution unit 12 by controlling the introduction units 29a and 29b while introducing the PET raw material Pm and the monomer D into the dissolution unit 12 to produce the dissolved solution Pd. This process increases the concentration of the first impurity R1 and the second impurity R2 in the dissolved solution Pd because the first impurity R1 and the second impurity R2 from the storage unit 20 are added to the dissolved solution Pd produced by mixing the PET raw material Pm and the monomer D. The control unit 30 introduces the dissolved solution Pd with the thus increased concentration of the first impurity R1 and the second impurity R2 into the storage unit 20 to separate the dissolved solution Pd into a layer of the first impurity R1, a layer of the PET solution P, and a layer of the second impurity R2 by gravity.

Here, the separated first impurity R1 and second impurity R2 are discharged from the discharge pipes 20a and 20b, and part of the PET solution P may also be discharged together with the first impurity R1 and the second impurity R2. If the concentration of the first impurity R1 and the second impurity R2 is low, a large amount of the PET solution P is discharged together with the first impurity R1 and the second impurity R2. In the second embodiment, however, the concentration of the first impurity R1 and the second impurity R2 is increased, so that the amount of the discharged PET solution P can be reduced, and consequently the yields of the monomers D and E can be improved. In the present embodiment, it is preferable to perform the process of separating a predetermined amount of the first impurity R1 and the second impurity R2 in the storage unit 20 and returning them to the dissolution unit 12 to ensure that sufficient amounts of first impurity R1 and the second impurity R2 are returned to the dissolution unit 12. This process can increase the concentration of the first impurity R1 and the second impurity R2 in the dissolved solution Pd appropriately.

In the present embodiment, both the first impurity R1 and the second impurity R2 are supplied to the dissolution unit 12, but only the first impurity R1, which may contain solids allowed to settle by gravity, may be supplied to the dissolution unit 12.

### (Third Embodiment)

A third embodiment will now be described. The third embodiment differs from the first embodiment in that it includes a mechanism that recovers the carboxylic acid-derived monomer D contained in impurities collected in the solid liquid separation unit 13. In the third embodiment, the sections having a configuration common to those in the first embodiment will not be further elaborated.

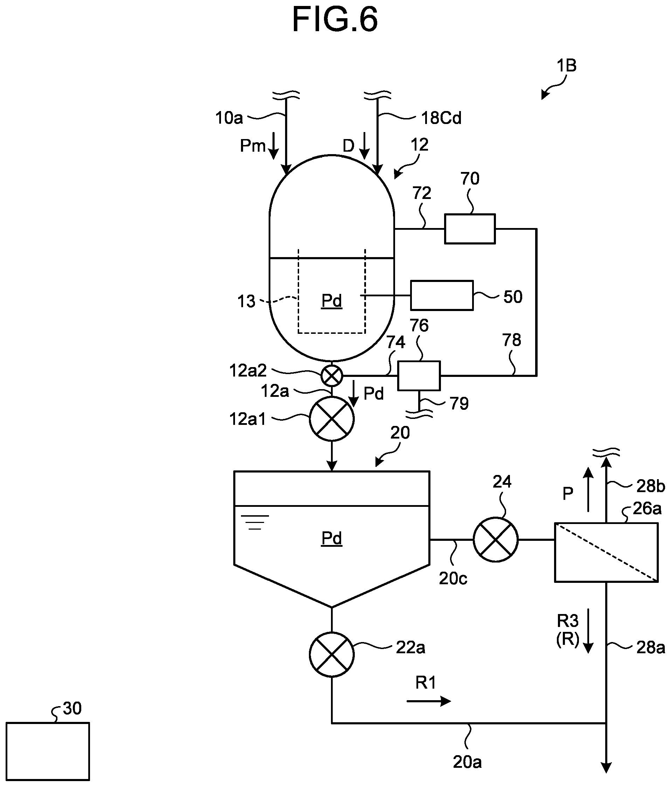

FIG. 6 is a partial schematic diagram of a separation system according to the third embodiment. As illustrated in FIG. 6, a separation system 1B according to the third embodiment includes a methanol supply unit 70, a supply pipe 72, a discharge pipe 74, a separation unit 76, a circulation pipe 78, and a recovery pipe 79. Methanol is stored in the methanol supply unit 70. The supply pipe 72 connects the methanol supply unit 70 to the dissolution unit 12. The discharge pipe 74 connects a regulator 12a2 disposed upstream of the regulator 12a1 of the introduction pipe 12a to the separation unit 76. The regulator 12a2 is a three-way valve, for example, that switches whether to supply a liquid in the dissolution unit 12 to the separation unit 76 or to the storage unit 20.

The separation unit 76 processes the supplied liquid and separates it into methanol and a monomer. The separation unit 76 separates the supplied liquid into methanol and a monomer by distillation. The circulation pipe 78 connects the separation unit 76 to the methanol supply unit 70. The circulation pipe 78 supplies methanol separated in the separation unit 76 to the methanol supply unit 70. The methanol thus can be reused. The recovery pipe 79 conveys the monomer separated in the separation unit 76. The recovery pipe 79 may supply the monomer to any destination and may be supplied to the storage unit 20 or to the dissolution unit 12.

After producing a certain amount of dissolved solution Pd in the dissolution unit 12, the separation system 1B stops supplying the raw material to the dissolution unit 12 and discharges the dissolved solution Pd into the storage unit 20. The separation system 1B then closes the regulator 12a1 and thereafter supplies methanol from the methanol supply unit 70 to the dissolution unit 12 via the supply pipe 72. The methanol supplied to the dissolution unit 12 is mixed with impurities collected in the solid liquid separation unit 13 to dissolve the monomer D adhering to the impurities. This process produces a liquid mixture of monomer D and methanol in the dissolution unit 12. The separation system 1B discharges the liquid produced in the dissolution unit 12 to the separation unit 76 through the discharge pipe 74. The separation unit 76 distills the liquid and separates it into the monomer D and methanol, which are discharged into the circulation pipe 78 and the recovery pipe 79, respectively.

The separation system 1B can recover the monomer D from impurities by supplying methanol to the impurities collected in the solid liquid separation unit 13 to dissolve and recover the monomer D adhering to the impurities. This configuration enables efficient use of the monomer D and increases the overall processing efficiency. In addition, the removal of the monomer D from impurities facilitates the processing of impurities. When the impurities are natural fibers such as cotton, the impurities can be reused.

In the present embodiment, methanol is supplied from the methanol supply unit 70, but any liquid that dissolves the monomer D to be recovered may be supplied instead of methanol. In other words, the methanol supply unit 70 may be a supply unit that supplies a liquid (recovery liquid) including a component that dissolves the monomer D.

In the present embodiment, each unit is connected to the dissolution unit 12 so that the dissolution unit 12 performs the process of recovering the monomer D from the impurities collected in the solid liquid separation unit 13. However, the embodiment is not limited to this configuration. For example, the separation system 1B may recover the monomer D by supplying methanol to the impurities recovered by the foreign matter recovering unit 50 and allowing the methanol to dissolve the monomer D. Processing the impurities recovered by the foreign matter recovering unit 50 enables continuous processing in the dissolution unit 12, whereby the processing in the separation system 1B can be performed in a continuous manner.

The separation system 1B may include a plurality of dissolution units 12 and allow any of the dissolution units 12 to recover the monomer D while allowing any of the dissolution units 12 to discharge the dissolved solution, whereby continuous processing can be performed in the entire separation system 1B.

### (Fourth Embodiment)

A fourth embodiment will now be described. In a separation system 1C according to the fourth embodiment, each unit for recovering foreign matter is disposed downstream of a reaction unit 106 that performs depolymerization.

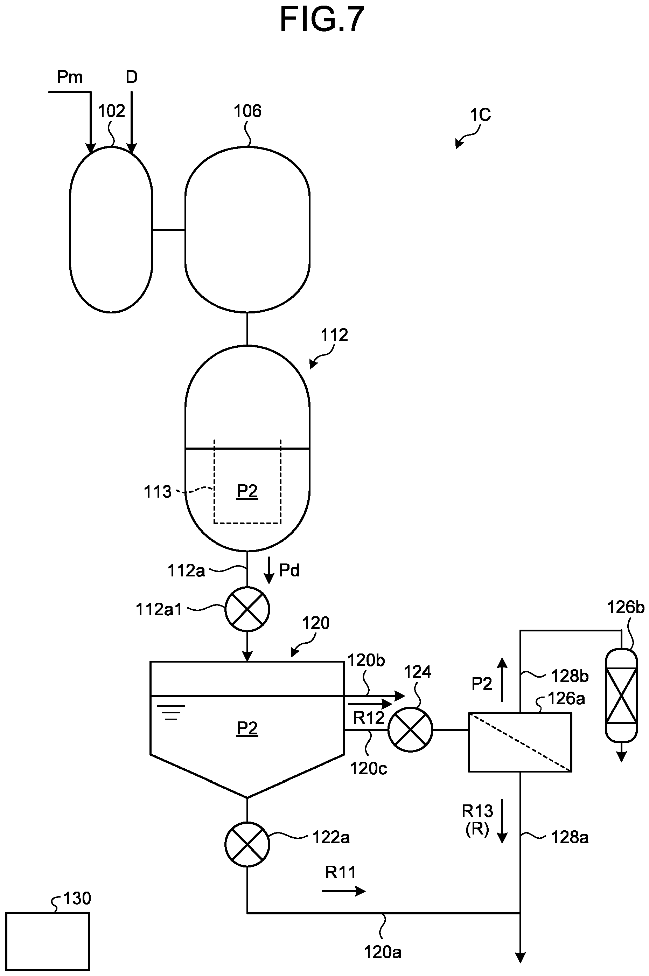

FIG. 7 is a partial schematic diagram of a separation system according to the fourth embodiment. As illustrated in FIG. 7, the separation system 1C according to the fourth embodiment includes a dissolution unit 102, a reaction unit 106, a first storage unit 112, a solid liquid separation unit 113, a second storage unit 120, a removal unit 126, and a control unit 130. The first storage unit 112, the solid liquid separation unit 113, the second storage unit 120, and the removal unit 126 are foreign matter removing units that remove impurities from a solution containing depolymerized monomers. The liquid that passes through the removal unit 126 is supplied to the separation unit 18. The control unit 130 controls the operation of each unit in the same manner as the control unit 30.

The dissolution unit 102 produces a dissolved solution in which the PET raw material Pm to be processed is dissolved. The dissolution unit 102 preferably produces the dissolved solution with the supplied monomer D in the same manner as the dissolution unit 12, but may dissolve the PET raw material Pm with a component other than the monomer D.

In the reaction unit 106, the dissolved solution (PET solution) produced in the dissolution unit 102 and the reaction solvent M are introduced, and PET in the PET solution P is depolymerized. The reaction unit 106 can have a configuration similar to the reaction unit 16.

The first storage unit 112 stores a liquid produced in the reaction unit 106, that is, a liquid containing polyester produced by depolymerizing PET (in the present embodiment, the second depolymerized polyester P2). The first storage unit 112 discharges the liquid through a discharge pipe 112a. The discharge pipe 112a has a regulator 112a1 to control the discharge of liquid.

The solid liquid separation unit 113 removes impurities of a predetermined size or larger in the liquid passing through the first storage unit 112. The solid liquid separation unit 113 has a configuration similar to the solid liquid separation unit 13.

The second storage unit 120 has a configuration similar to the storage unit 20. The liquid from which impurities have been removed in the solid liquid separation unit 113 is supplied from the first storage unit 112 and stored in the second storage unit 120. The liquid in the second storage unit 120 is allowed to stand still for a predetermined time period and thereby separated by gravity into a layer of a first impurity R11, a layer containing the second depolymerized polyester P2, and a layer of the second impurity R2. A discharge pipe 120a is a pipe for discharging the first impurity R11 separated into the layer below the liquid from the second storage unit 20. The discharge pipe 120a is provided with a first discharge unit 122a. The first discharge unit 122a is a mechanism that discharges the first impurity R1 in the second storage unit 120 from the second storage unit 120, and in the present embodiment, is a pump. A discharge pipe 120b is connected to the second storage unit 120. The discharge pipe 120b is a pipe for discharging a second impurity R12 separated into the layer above the liquid from the second storage unit 120. An introduction pipe 120c is connected to the second storage unit 120. The introduction pipe 120c is a pipe for leading the liquid containing the second depolymerized polyester P2 separated from the impurities R from the second storage unit 120. The introduction pipe 120c is provided with an outlet unit 124. The outlet unit 124 is a mechanism that leads the liquid in the second storage unit 120 from the second storage unit 120, and is a pump in the present embodiment.

The removal unit 126 is a mechanism that removes a third impurity R13 from the liquid containing the second depolymerized polyester P2. The removal unit 126 is connected to the introduction pipe 120c. A first removal unit 126a and a second removal unit 126b are provided as the removal unit 126. The first removal unit 126a is a filtering machine and collects a solid component. The second removal unit 126b is an adsorber and adsorbs a solid component that is not collected by the first removal unit 126a. The configuration of each part of the removal unit 126 is similar to that of the removal unit 26.

The separation system 1C suitably removes foreign matter contained in a liquid .by performing solid liquid separation for the depolymerized liquid to remove foreign matter of a predetermined size in the solid liquid separation unit 113, and thereafter performing separation using gravity in the second storage unit 120. Thus, even in a case where foreign matter contained in the depolymerized liquid is removed, the foreign matter can be suitably removed by performing solid liquid separation in the solid liquid separation unit 113 and thereafter performing separation using gravity in the second storage unit 120. Furthermore, foreign matter can be suitably removed from the depolymerized liquid by removing the foreign matter in the removal unit 126. The separation system 1C according to the present embodiment may omit any of the solid liquid separation unit 113, the second storage unit 120, and the removal unit 126 for the depolymerized liquid.

### (Fifth Embodiment)

A fifth embodiment will now be described. The fifth embodiment includes, in addition to the structure of the third embodiment in FIG. 6, a mechanism that recovers the PET solution P contained in the solid liquid separation unit 13 using the carboxylic acid-derived monomer D. In the fifth embodiment, the sections having a configuration common to those in the third embodiment will not be further elaborated.

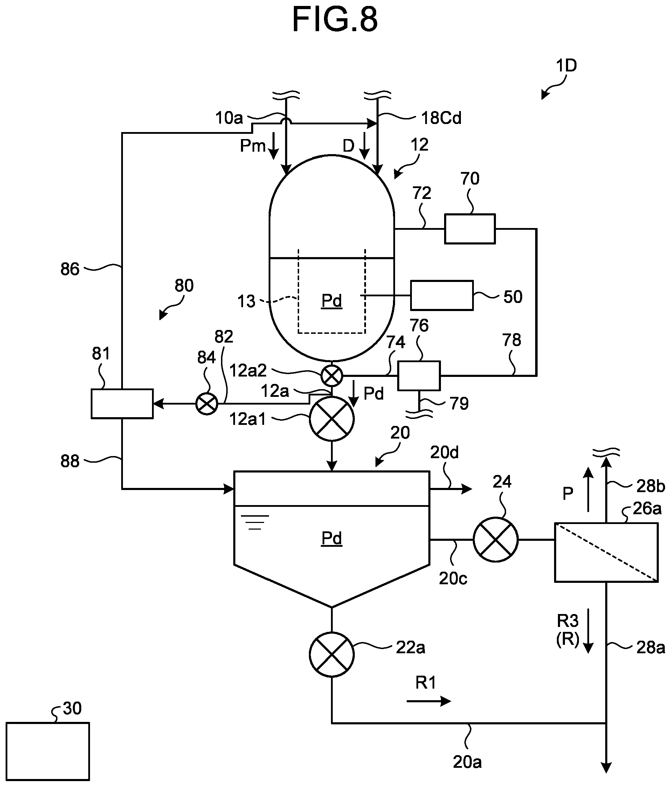

FIG. 8 is a partial schematic diagram of a separation system according to the fifth embodiment. As illustrated in FIG. 8, a separation system 1D according to the fifth embodiment includes a recovery unit 80 in addition to the configuration of the third embodiment. The recovery unit 80 includes a dissolved solution concentrator 81, a separation pipe 82, a regulator 84, a monomer recovery pipe 86, and a PET discharge pipe 88. The dissolved solution concentrator 81 is supplied with the dissolved solution Pd discharged from the solid liquid separation unit 13 and separates the monomer D from the dissolved solution Pd. The dissolved solution concentrator 81 can use various devices to separate the monomer D from the supplied dissolved solution Pd. For example, the dissolved solution concentrator 81 can use a mechanism that heats the supplied dissolved solution Pd to a predetermined temperature, and evaporates and separates the monomer D. In this case, it is preferable that the dissolved solution concentrator 81 also includes a mechanism that cools the vapor and liquefy the monomer D.

The separation pipe 82 is a pipeline that connects the introduction pipe 12a to the dissolved solution concentrator 81. The separation pipe 82 is connected upstream of the regulator 12a1 of the introduction pipe 12a. The separation pipe 82 supplies the dissolved solution Pd discharged from the solid liquid separation unit 13 to the dissolved solution concentrator 81. The regulator 84 is provided in the separation unit 82. The regulator 84 is, for example, an open/close valve that supplies the dissolved solution Pd in the introduction pipe 12a to the dissolved solution concentrator 81, in the open state, and stops the supply of the dissolved solution Pd in the introduction pipe 12a to the dissolved solution concentrator 81, in the closed state. However, the regulator 84 is not limited to an open/close valve and may be any mechanism that can regulate the supply of the dissolved solution Pd to the dissolved solution concentrator 81.

The monomer recovery pipe 86 connects the dissolved solution concentrator 81 to the introduction pipe 18Cd. The monomer recovery pipe 86 supplies the monomer D separated from the dissolved solution Pd in the dissolved solution concentrator 81, to the introduction pipe 18Cd. The destination to which the monomer recovery pipe 86 supplies the monomer D separated from the dissolved solution Pd in the dissolved solution concentrator 81 is not limited to this. The monomer recovery pipe 86 can be a mechanism that supplies the monomer D to any mechanism that stores the monomer D or supplies the monomer D to the dissolution unit 12.

The PET discharge pipe 88 connects the dissolved solution concentrator 81 to the storage unit 20. The PET discharge pipe 88 supplies the dissolved solution Pd (concentrated dissolved solution) from which the monomer D has been separated in the dissolved solution concentrator 81, to the storage unit 20.

The processing in the dissolved solution concentrator 81 in the separation system 1D will be described. The separation system 1D discharges the dissolved solution in the solid liquid separation unit 13 into the storage unit 20 and thereafter performs processing using the dissolved solution concentrator 81. It is preferable that the separation system 1D performs the process of recovering the monomer D using methanol described in the separation system 1B after performing the processing in the dissolved solution concentrator 81.

The separation system 1D supplies the monomer D to the solid liquid separation unit 13 from the introduction pipe 18Cd after discharging the dissolved solution in the solid liquid separation unit 13 into the storage unit 20. The separation system 1D can recover more PET contained in the PET raw material Pm by performing the process of eluting PET from the PET raw material Pm with the monomer D multiple times. The separation system 1D supplies, to the dissolved solution concentrator 81, the dissolved solution Pd resulting from the recovery process using the monomer D that is performed after the dissolved solution is once discharged into the storage unit 20. The timing for supplying the dissolved solution Pd to the dissolved solution concentrator 81 can be set as desired. The dissolved solution concentrator 81 separates the monomer D from the supplied dissolved solution Pd. The dissolved solution concentrator 81 discharges the separated monomer D into the introduction pipe 18Cd through the monomer recovery pipe 86, and supplies the dissolved solution from which the monomer D has been separated to the storage unit 20 through the PET discharge pipe 88.

The separation system 1D can recover more PET from the PET raw material Pm by performing the process of producing the dissolved solution Pd from the PET raw material Pm using the monomer D multiple times. In addition, the separation system 1D can reuse the monomer supplied to the solid liquid separation unit 13 by processing the dissolved solution Pd discharged from the solid liquid separation unit 13 for the second and subsequent times in the dissolved solution concentrator 81. Thus, increase in the amount of monomer D used in the separation system 1D can be suppressed. In addition, the concentration of PET in the dissolved solution Pm supplied to the storage unit 20 can be increased, and energy required for the processing downstream of the storage unit 20 can be reduced. Size increase of the system also can be suppressed.

In the separation system 1D, a second separation unit 20d connected to the storage unit 20 is a mechanism that uses overflow. The storage unit 20 does not have the skimmer in the foregoing embodiment but has the second separation unit 20d. The second separation unit 20d may further include a skimmer. The second separation unit 20d has a discharge pipe, and the discharge pipe is connected to the liquid level where the second impurity is accumulated in the storage unit 20. The second discharge unit 20d discharges the liquid that reaches the level where it is connected, to the outside of the storage unit 20. With this configuration, the second separation unit 20d can discharge the second impurity contained in the storage unit 20 without using a drive source. The second separation unit 20d may be a mechanism that has a pump or valve in a pipeline for recovering a liquid overflow and discharge the liquid when the liquid level of the liquid in the storage unit 20 is above a connection portion of the pipeline of the second discharge unit although the timing for recovering the second impurity is controlled.

### (Sixth Embodiment)

A sixth embodiment will now be described. The sixth embodiment uses the alcohol-derived monomer E, for example, ethylene glycol, instead of the carboxylic acid-derived monomer D, to produce a dissolved solution in which PET is dissolved from a PET raw material. In other words, the sixth embodiment is an embodiment different from the foregoing embodiments in monomer that produces a dissolved solution. The monomer E is an alcohol component in the process of decomposing PET, specifically in the second depolymerized polyester P2. In the sixth embodiment, the sections having a configuration common to those in the first embodiment will not be further elaborated. The separation system can produce a dissolved solution using various monomers derived from polyethylene terephthalate decomposition, including the polymers D and E.

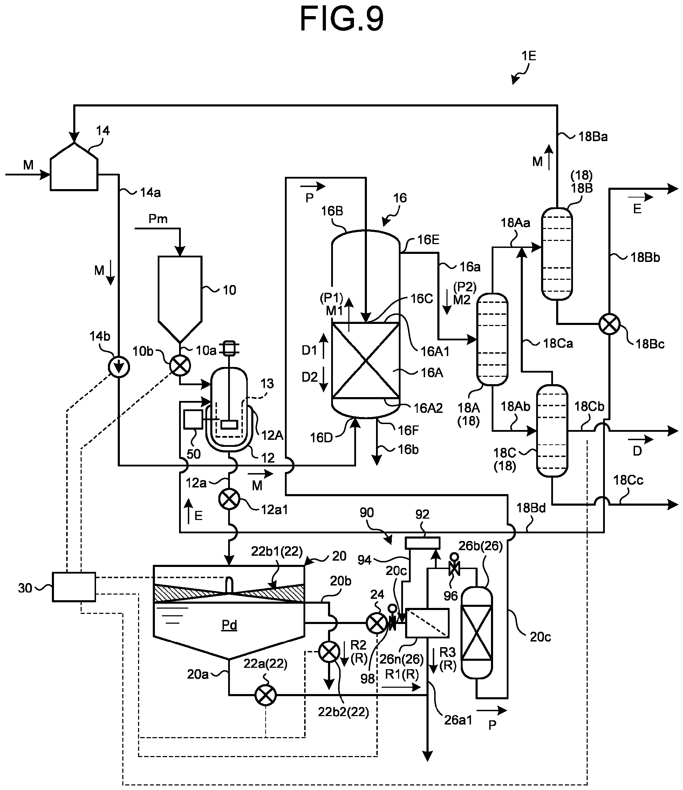

FIG. 9 is a partial schematic diagram of a separation system according to the sixth embodiment. A separation system 1E illustrated in FIG. 9 differs from the separation system 1 in monomer supplied to the dissolution unit 12. The separation system 1E does not have a path to supply the monomer D to the dissolution unit 12. The separation system 1E has an introduction pipe 18Bd connected to the outlet pipe 18Bb for discharging the monomer E, so that the monomer E flows into the introduction pipe 18Bd. The introduction pipe 18Bd has one end connected to a regulator 18Bc of the outlet pipe 18Bb and the other end connected to the dissolution unit 12. The regulator 18Bc is, for example, an open/close valve that supplies the monomer E to the dissolution unit 12, in the open state, and stops the supply of the monomer E to the dissolution unit 12, in the closed state. However, the regulator 18Bd is not limited to an open/close valve and may be any mechanism that can regulate the supply of the monomer E to the dissolution unit 12. In the present embodiment, the regulator 18Bd is provided at the introduction pipe 18Bb. However, the regulator 18Bd may be provided at any location. The introduction pipe 18Bd may not necessarily be connected to the outlet pipe 18Bb and may be directly connected to the second separation unit 18B. For example, a storage unit (basin) for storing the monomer E may be provided at the outlet pipe 18Bd, and the introduction pipe 18Bd may be connected to the storage unit.

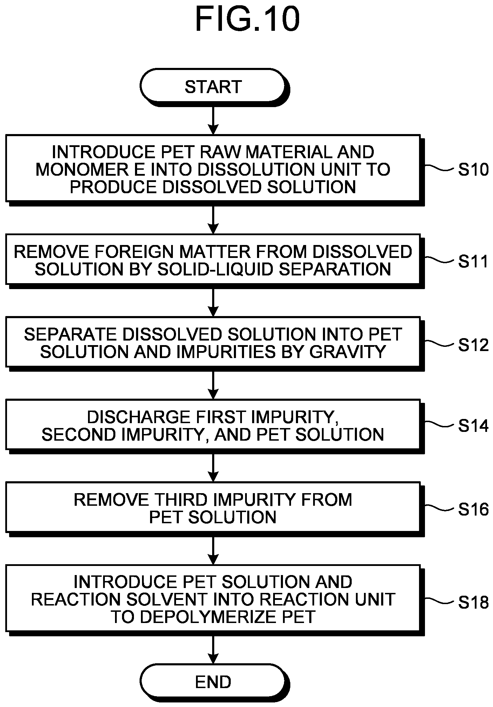

The flow of the operation of the separation system 1E described above will be described based on a flowchart. FIG. 10 is a flowchart illustrating an operation flow of the separation system. As illustrated in FIG. 10, the control unit 30 introduces the PET raw material Pm and the monomer E into the dissolution unit 12 to produce the dissolved solution Pd (step S10). The separation system 1 removes the impurities R from the dissolved solution Pd by solid liquid separation (step S11). The control unit 30 then supplies the dissolved solution Pd to the storage unit 20 to separate the dissolved solution Pd into the first impurity R1, the second impurity R2, and the PET solution P by gravity (step S12). The control unit 30 discharges the first impurity R1, the second impurity R2, and the PET solution P from the storage unit 20 (step S14) and allows the removal unit 26 to remove the third impurity R3 from the PET solution P (step S16). The control unit 30 then introduces the PET solution P and the reaction solvent M into the reaction unit 16 to depolymerize PET in the PET solution P (step S18).

The separation system 1E can also dissolve PET in the monomer E by supplying the monomer E to the PET raw material Pm. In this way, the monomer E of an alcohol component separated from PET can be used as the monomer supplied to the PET raw material Pm. When the monomer E is used, the substance produced in the separation system 1E can also be used to produce the dissolved solution. In addition, since the substance circulating in the path can be used to produce the dissolved solution, the inclusion of substances other than a target substance can be suppressed.

The first removal unit 26a in the present embodiment is a ceramic filter formed of ceramic. The first removal unit 26a removes a polymerization catalyst of 0.1 µm or greater and 1.0 µm or smaller from the PET solution.

The separation system 1E includes a filter protection mechanism 90. The filter protection mechanism 90 allows a heating medium for regulating temperature to circulate through the first removal unit 26a to regulate the temperature of the first removal unit 26a. The filter protection mechanism 90 includes a temperature regulator 92, a circulation line 94, a regulator 96, and a regulator 98. Here, ethylene glycol, which is the monomer E, is preferably used as the heating medium. The temperature regulator 92 regulates the temperature of the heating medium for regulating temperature. The temperature regulator 92 has a heating mechanism that elevates the temperature of the heating medium and a cooling mechanism that lowers the temperature of the heating medium. The circulation line 94 is a pipeline that serves as a path for the heating medium to circulate between the first removal unit 26a and the filter protection mechanism 90. The circulation line 94 is connected between an upstream side from the first removal unit 26a of the introduction pipe 20c and a downstream side from the first removal unit 26a of the introduction pipe 20c. The regulator 96 is disposed downstream from the downstream connection of the introduction pipe 20c to the circulation line 92. The regulator 98 is disposed upstream from the upstream connection of the introduction pipe 20c to the circulation line 92. The regulator 96 and the regulator 98 are valves switchable between opening and closing, and are closed to allow the heating medium to circulate between the filter protection mechanism 90 and the first removal unit 26a and open to allow the PET solution P to be distributed to the first removal unit 26a.

The filter protection mechanism 90 supplies the heated heating medium to the first removal unit 26a to heat the first removal unit 26a before the PET solution P is distributed to the first removal unit 26a of the separation system 1E. After the distribution of the PET solution P to the first removal unit 26a of the separation system 1E is completed, the filter protection mechanism 90 supplies the heating medium to the first removal unit 26a and gradually lowers the temperature of the supplied heating medium to cool the first removal unit 26a.

The separation system 1E can maintain the performance of the ceramic filter by regulating the temperature of the first removal unit 26a with the filter protection mechanism 90 to keep the rate of temperature change at a predetermined rate or lower. The ceramic filter can be used as the first removal unit 26a to suitably remove foreign matter. When a ceramic filter is used as the first removal unit 26a, foreign matter with a predetermined particle size can be removed by the ceramic filter, and pigments and the like can be removed by the adsorber which is the second removal unit 26b. Ethylene glycol can be used as the heating medium to suitably elevate or lower the temperature of the first removal unit 26a.

In the sixth embodiment, the filter protection mechanism 90 is provided in the separation system that produces a dissolved solution with the monomer E. However, it is preferable that a temperature regulating mechanism is also provided in the separation system that produces a dissolved solution with the monomer D, as in the first to fifth embodiments. Also in this case, the monomer E, which is ethylene glycol in the present embodiment, is preferably used as the heating medium circulated for temperature regulation. Ethylene glycol can be used as the heating medium to suitably elevate or lower the temperature of the first removal unit 26a.

### (Seventh Embodiment)

A seventh embodiment will now be described. The seventh embodiment includes a mechanism that recovers the PET solution P contained in the solid liquid separation unit 13 using the monomer E of an alcohol component. In the seventh embodiment, the sections having a configuration common to those in the sixth embodiment will not be further elaborated.

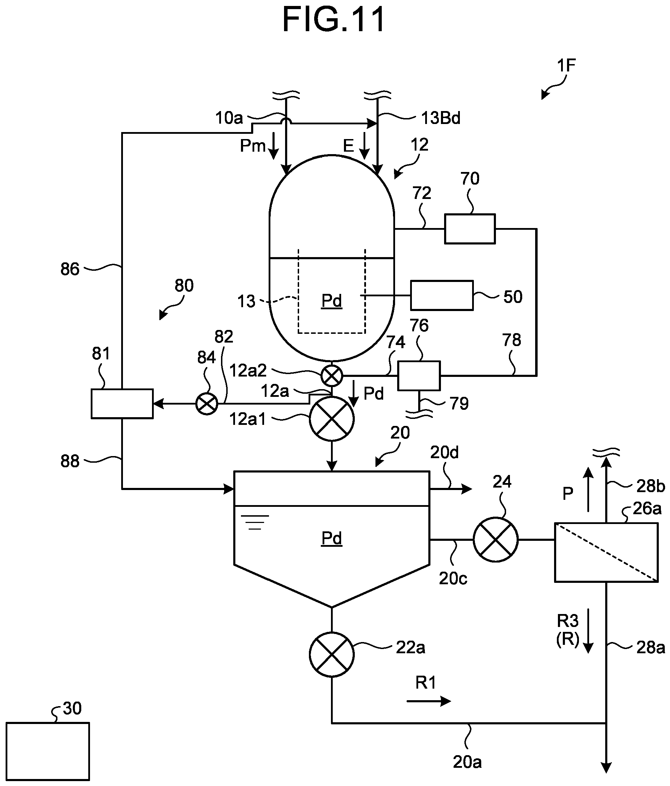

FIG. 11 is a partial schematic diagram of a separation system according to the seventh embodiment. As illustrated in FIG. 11, a separation system 1F according to the seventh embodiment includes a methanol supply unit 70, a supply pipe 72, a discharge pipe 74, a separation unit 76, a circulation pipe 78, a recovery pipe 79, and a recovery unit 80, in addition to the configuration of the sixth embodiment. The recovery unit 80 includes a dissolved solution concentrator 81, a separation pipe 82, a regulator 84, a monomer recovery pipe 86, and a PET discharge pipe 88. Methanol is stored in the methanol supply unit 70. The supply pipe 72 connects the methanol supply unit 70 to the dissolution unit 12. The discharge pipe 74 connects a regulator 12a2 disposed upstream of the regulator 12a1 of the introduction pipe 12a to the separation unit 76. The regulator 12a2 is a three-way valve, for example, that switches whether to supply a liquid in the dissolution unit 12 to the separation unit 76 or to the storage unit 20.

The separation unit 76 processes the supplied liquid and separates it into methanol and a monomer. The separation unit 76 separates the supplied liquid into methanol and a monomer by distillation. The circulation pipe 78 connects the separation unit 76 to the methanol supply unit 70. The circulation pipe 78 supplies methanol separated in the separation unit 76 to the methanol supply unit 70. The methanol thus can be reused. The recovery pipe 79 conveys the monomer separated in the separation unit 76. The recovery pipe 79 may supply the monomer to any destination and may be supplied to the storage unit 20 or to the dissolution unit 12.

After producing a certain amount of dissolved solution Pd in the dissolution unit 12, the separation system 1F stops supplying the raw material to the dissolution unit 12 and discharges the dissolved solution Pd into the storage unit 20. The separation system 1B then closes the regulator 12a1 and thereafter supplies methanol from the methanol supply unit 70 to the dissolution unit 12 via the supply pipe 72. The methanol supplied to the dissolution unit 12 is mixed with impurities collected in the solid liquid separation unit 13 to dissolve the monomer E adhering to the impurities. This process produces a liquid mixture of monomer E and methanol in the dissolution unit 12. The separation system 1F discharges the liquid produced in the dissolution unit 12 to the separation unit 76 through the discharge pipe 74. The separation unit 76 distills the liquid and separates it into the monomer E and methanol, which are discharged into the circulation pipe 78 and the recovery pipe 79, respectively.

The separation system 1F can recover the monomer E from impurities by supplying methanol to the impurities collected in the solid liquid separation unit 13 to dissolve and recover the monomer E adhering to the impurities. This configuration enables efficient use of the monomer E and increases the overall processing efficiency. In addition, the removal of the monomer E from the impurities facilitates the processing of impurities. When the impurities are natural fibers such as cotton, the impurities can be reused.

In the present embodiment, methanol is supplied from the methanol supply unit 70, but any liquid that dissolves the monomer E to be recovered may be supplied instead of methanol. In other words, the methanol supply unit 70 may be a supply unit that supplies a liquid (recovery liquid) including a component that dissolves the monomer E.

In the present embodiment, each unit is connected to the dissolution unit 12 so that the dissolution unit 12 performs the process of recovering the monomer E from the impurities collected in the solid liquid separation unit 13. However, the embodiment is not limited to this configuration. For example, the separation system 1F may recover the monomer E by supplying methanol to the impurities recovered by the foreign matter recovering unit 50 and allowing the methanol to dissolve the monomer E. Processing the impurities recovered by the foreign matter recovering unit 50 enables continuous processing in the dissolution unit 12, whereby the processing in the separation system 1B can be performed in a continuous manner.

The separation system 1F may include a plurality of dissolution units 12 and allow any of the dissolution units 12 to recover the monomer E while allowing any of the dissolution units 12 to discharge the dissolved solution, whereby continuous processing can be performed in the entire separation system 1B.

The dissolved solution concentrator 81 is supplied with the dissolved solution Pd discharged from the solid liquid separation unit 13 and separates the monomer E from the dissolved solution Pd. The dissolved solution concentrator 81 can use various devices to separate the monomer E from the supplied dissolved solution Pd. For example, the dissolved solution concentrator 81 can use a mechanism that heats the supplied dissolved solution Pd to a predetermined temperature, and evaporates and separates the monomer E. In this case, it is preferable that the dissolved solution concentrator 81 also includes a mechanism that cools the vapor and liquefy the monomer E.

The separation pipe 82 is a pipeline that connects the introduction pipe 12a to the dissolved solution concentrator 81. The separation pipe 82 is connected upstream of the regulator 12a1 of the introduction pipe 12a. The separation pipe 82 supplies the dissolved solution Pd discharged from the solid liquid separation unit 13 to the dissolved solution concentrator 81. The regulator 84 is provided in the separation unit 82. The regulator 84 is, for example, an open/close valve that supplies the dissolved solution Pd in the introduction pipe 12a to the dissolved solution concentrator 81, in the open state, and stops the supply of the dissolved solution Pd in the introduction pipe 12a to the dissolved solution concentrator 81, in the closed state. However, the regulator 84 is not limited to an open/close valve and may be any mechanism that can regulate the supply of the dissolved solution Pd to the dissolved solution concentrator 81.

The monomer recovery pipe 86 connects the dissolved solution concentrator 81 to the introduction pipe 18Cd. The monomer recovery pipe 86 supplies the monomer E separated from the dissolved solution Pd in the dissolved solution concentrator 81, to the introduction pipe 18Cd. The destination to which the monomer recovery pipe 86 supplies the monomer E separated from the dissolved solution Pd in the dissolved solution concentrator 81 is not limited to this. The monomer recovery pipe 86 may be any mechanism that stores the monomer E or supplies the monomer E to the dissolution unit 12.

The PET discharge pipe 88 connects the dissolved solution concentrator 81 to the storage unit 20. The PET discharge pipe 88 supplies the dissolved solution Pd (concentrated dissolved solution) from which the monomer E has been separated in the dissolved solution concentrator 81, to the storage unit 20.

The processing in the dissolved solution concentrator 81 in the separation system 1F will be described. The separation system 1D discharges the dissolved solution in the solid liquid separation unit 13 into the storage unit 20 and thereafter performs processing using the dissolved solution concentrator 81. It is preferable that the separation system 1F performs the process of recovering the monomer E using methanol described in the separation system 1B after performing the processing in the dissolved solution concentrator 81.

The separation system 1F supplies the monomer E to the solid liquid separation unit 13 from the introduction unit 18Cd after discharging the dissolved solution in the solid liquid separation unit 13 into the storage unit 20. The separation system 1F can recover more PET contained in the PET raw material Pm by performing the process of eluting PET from the PET raw material Pm with the monomer E multiple times. The separation system 1D supplies, to the dissolved solution concentrator 81, the dissolved solution Pd resulting from the recovery process using the monomer E that is performed after the dissolved solution is once discharged into the storage unit 20. The timing for supplying the dissolved solution Pd to the dissolved solution concentrator 81 can be set as desired. The dissolved solution concentrator 81 separates the monomer E from the supplied dissolved solution Pd. The dissolved solution concentrator 81 discharges the separated monomer E into the introduction pipe 18Cd through the monomer recovery pipe 86, and supplies the dissolved solution from which the monomer E has been separated to the storage unit 20 through the PET discharge pipe 88.

The separation system is configured to produce a dissolved solution in the dissolution unit 12 and remove impurities in the storage unit 20 as in the foregoing embodiments. However, depending on the condition of the PET raw material Pm, the dissolution unit 12 and the storage unit 20 may have a different configuration, and the separation unit 18 may have the configuration of the present embodiment. It is preferable that the discharge unit includes the first discharge unit 22a, the second discharge unit 22b, and the third discharge unit 22c. However, the system may include only the third discharge unit 22c without the first discharge unit 22a and the second discharge unit 22b.

### (Effects of the Present Disclosure)

(1) A separation system comprising: a solid liquid separation unit configured to remove an impurity by solid-liquid separation from a dissolved solution including a PET solution in which polyethylene terephthalate is dissolved in a monomer derived from polyethylene terephthalate decomposition, and an impurity that is a component other than the polyethylene terephthalate; a storage unit configured to store therein the PET solution separated from the impurity by the solid liquid separation unit and further separate the impurity from the PET solution by gravity; and a reaction unit into which the PET solution separated from the impurity in the storage unit and a reaction solvent reactive with polyethylene terephthalate are introduced and in which polyethylene terephthalate in the PET solution is depolymerized.
   According to the present disclosure, various processing can be performed after removing foreign matter of a certain size or larger. This configuration can enhance the handleability of the dissolved solution. After suitably removing foreign matter, polyethylene terephthalate can be depolymerized.
(2) The separation system according to (1), further comprising a circulation line connected to a bottom surface of the storage unit and configured to supply a liquid allowed to settle by gravity in the storage unit to the solid liquid separation unit. Foreign matter can be suitably removed in the solid liquid separation unit.
(3) The separation system according to(1) or (2), further comprising a discharge unit configured to discharge the separated impurity from an inside of the storage unit, wherein the discharge unit includes a first discharge unit configured to discharge a first impurity that is the impurity separated into a layer below the PET solution in the storage unit, and a second discharge unit configured to discharge a second impurity that is the impurity separated into a layer above the PET solution. Foreign matter can be suitably removed in the solid liquid separation unit. The first impurity R1 with a heavier specific gravity than that of the PET solution P and the second impurity R2 with a lighter specific gravity are properly recovered, so that PET and the impurities R (foreign matter) can be properly separated.
(4) The separation system according to one of (1) to (3), further comprising a removal unit disposed downstream of the storage unit and configured to remove an entrained impurity from the PET solution, the entrained impurity being the impurity present in the PET solution and discharged together with polyethylene terephthalate from the storage unit. Removing the impurity not separated by gravity separation can increase the purity of PET in the PET solution P and consequently can improve the yields of the monomers D and E.
(5) The separation system according to (4), wherein the removal unit includes a first removal unit that is a filtering machine, and the separation system further comprises: a circulation line configured to circulate a heating medium to the first removal unit; and a temperature regulator disposed on the circulation line to heat or cool the heating medium. According to the present disclosure, the performance of the ceramic filter can be maintained by regulating the temperature of the first removal unit 26a by regulating the temperature of the heating medium with the temperature regulator 92 of the filter protection mechanism 90, and keeping the rate of temperature change at a predetermined rate or lower.
(6) The separation system according to one of (1) to (5), further comprising a dissolution unit into which a PET raw material including polyethylene terephthalate and the monomer derived from polyethylene terephthalate decomposition are introduced to produce the dissolved solution, wherein the solid liquid separation unit is disposed in the dissolution unit. PET and the impurities R (foreign matter) can be properly separated.
(7) The separation system according to one of (1) to (6), wherein the reaction solvent is methanol, and the monomer derived from polyethylene terephthalate decomposition is dimethyl terephthalate. Dissolving PET with dimethyl terephthalate increases the fluidity of PET and facilitates introduction of PET into the reaction unit 16. Furthermore, PET can be properly depolymerized by reacting PET with methanol.
(8) The separation system according to one of (1) to (6), wherein the monomer derived from polyethylene terephthalate decomposition is a carboxylic acid-derived monomer. Dissolving PET with the carboxylic acid-derived monomer increases the fluidity of PET and facilitates introduction of PET into the reaction unit 16.
(9) The separation system according to one of (1) to (6), wherein the monomer derived from polyethylene terephthalate decomposition is a monomer of an alcohol component. Dissolving PET with the monomer of an alcohol component increases the fluidity of PET and facilitates introduction of PET into the reaction unit 16.
(10) A separation method comprising: a step of removing an impurity by solid-liquid separation from a dissolved solution including a PET solution in which polyethylene terephthalate is dissolved in a monomer derived from polyethylene terephthalate decomposition, and an impurity that is a component other than the polyethylene terephthalate; a storage step of storing the PET solution separated from the impurity by the solid-liquid separation, further separating the impurity from the PET solution by gravity, and supplying the PET solution to the reaction unit; and a step of allowing the PET solution separated from the impurity to react with a reaction solvent reactive with polyethylene terephthalate to depolymerize polyethylene terephthalate in the PET solution.

According to the present disclosure, various processing can be performed after removing foreign matter of a certain size or larger. This configuration can enhance the handleability of the dissolved solution. After suitably removing foreign matter, polyethylene terephthalate can be depolymerized.

Although the embodiments of the present invention have been described above, the embodiments are not intended to be limited by the contents of the embodiments. The aforementioned components also include those that can be readily conceived by those skilled in the art, those that are substantially identical, and those in the range of equivalence. Furthermore, the aforementioned components can be combined as appropriate. Furthermore, various omissions, substitutions, or modifications of the components can be made without departing from the spirit of the aforementioned embodiments.

### Reference Signs List

1 separation system
12 dissolution unit
13 solid liquid separation unit
14 solvent storage unit
16 reaction unit
18 separation unit
20 storage unit
22 discharge unit
30 control unit
D, E monomer
M reaction solvent
P PET solution
Pd dissolved solution
Pm PET raw material
R impurities
R1 first impurity
R2 second impurity
R3 third impurity

## Claims

1. A separation system comprising:
a solid liquid separation unit configured to remove an impurity by solid-liquid separation from a dissolved solution including a PET solution in which polyethylene terephthalate is dissolved in a monomer derived from polyethylene terephthalate decomposition, and an impurity that is a component other than the polyethylene terephthalate;
a storage unit configured to store therein the PET solution separated from the impurity by the solid liquid separation unit and further separate the impurity from the PET solution by gravity; and
a reaction unit into which the PET solution separated from the impurity in the storage unit and a reaction solvent reactive with polyethylene terephthalate are introduced and in which polyethylene terephthalate in the PET solution is depolymerized.

2. The separation system according to claim 1, further comprising a circulation line connected to a bottom surface of the storage unit and configured to supply a liquid allowed to settle by gravity in the storage unit to the solid liquid separation unit.

3. The separation system according to claim 1 or claim 2, further comprising a discharge unit configured to discharge the separated impurity from an inside of the storage unit, wherein
the discharge unit includes a first discharge unit configured to discharge a first impurity that is the impurity separated into a layer below the PET solution in the storage unit, and a second discharge unit configured to discharge a second impurity that is the impurity separated into a layer above the PET solution.

4. The separation system according to claim 1, further comprising a removal unit disposed downstream of the storage unit and configured to remove an entrained impurity from the PET solution, the entrained impurity being the impurity present in the PET solution and discharged together with polyethylene terephthalate from the storage unit.

5. The separation system according to claim 4, wherein
the removal unit includes a first removal unit that is a filtering machine, and
the separation system further comprises:
a circulation line configured to circulate a heating medium to the first removal unit; and
a temperature regulator disposed on the circulation line to heat or cool the heating medium.

6. The separation system according to claim 1 or claim 2, further comprising a dissolution unit into which a PET raw material including polyethylene terephthalate and the monomer derived from polyethylene terephthalate decomposition are introduced to produce the dissolved solution, wherein
the solid liquid separation unit is disposed in the dissolution unit.

7. The separation system according to claim 1 or claim 2, wherein the reaction solvent is methanol, and the monomer derived from polyethylene terephthalate decomposition is dimethyl terephthalate.

8. The separation system according to claim 1 or claim 2, wherein the monomer derived from polyethylene terephthalate decomposition is a carboxylic acid-derived monomer.

9. The separation system according to claim 1 or claim 2, wherein the monomer derived from polyethylene terephthalate decomposition is a monomer of an alcohol component.

10. A separation method comprising:
a step of removing an impurity by solid-liquid separation from a dissolved solution including a PET solution in which polyethylene terephthalate is dissolved in a monomer derived from polyethylene terephthalate decomposition, and an impurity that is a component other than the polyethylene terephthalate;
a storage step of storing the PET solution separated from the impurity by the solid-liquid separation, further separating the impurity from the PET solution by gravity, and supplying the PET solution to the reaction unit; and
a step of allowing the PET solution separated from the impurity to react with a reaction solvent reactive with polyethylene terephthalate to depolymerize polyethylene terephthalate in the PET solution.
